(19) Europäisches Patentamt
European Patent Office
Office européen des brevets

(11) **EP 4 507 372 B1**

(12) # EUROPEAN PATENT SPECIFICATION

(45) Date of publication and mention of the grant of the patent:
**15.04.2026 Bulletin 2026/16**

(21) Application number: **24194068.3**

(22) Date of filing: **12.08.2024**

(51) International Patent Classification (IPC):
**H04W 28/02** *(2009.01)* **H04W 88/08** *(2009.01)*

(52) Cooperative Patent Classification (CPC):
**H04W 88/085; H04W 28/02**

(54) **CU-DU FLOW CONTROL OPTIMIZATIONS FOR LOSSY MIDHAUL IN O-RAN NETWORKS**

CU-DU-FLUSSSTEUERUNGSOPTIMIERUNGEN FÜR VERLUSTBEHAFTETES MIDHAUL IN O-RAN-NETZWERKEN

OPTIMISATIONS DE COMMANDE DE FLUX DE CU-DU POUR UNE INTERFACE INTERMÉDIAIRE AVEC PERTE DANS DES RÉSEAUX O-RAN

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.08.2023 IN 202321053752**
**05.08.2024 US 202418794552**

(43) Date of publication of application:
**12.02.2025 Bulletin 2025/07**

(73) Proprietor: **Mavenir Systems, Inc.**
**Richardson, TX 75081 (US)**

(72) Inventors:
• **KOMPALLI, Sayee**
**Bangalore 560036 (IN)**
• **TANEJA, Mukesh**
**Bangalore 560037 (IN)**
• **KAIMALETTU, Sunil**
**Bengaluru 560045 (IN)**

(74) Representative: **dompatent**
**Partnerschaft von**
**Patentanwälten und Rechtsanwälten mbB**
**Deichmannhaus am Dom**
**Bahnhofsvorplatz 1**
**50667 Köln (DE)**

(56) References cited:
**US-A1- 2020 382 254**

**Description**

BACKGROUND OF THE INVENTION

1. Field of the Invention

The present disclosure is related to Open Radio Access Network (O-RAN) systems, and relates more particularly to optimizing CU-DU flow control for lossy midhaul in O-RAN networks.

2. Description of Related Art

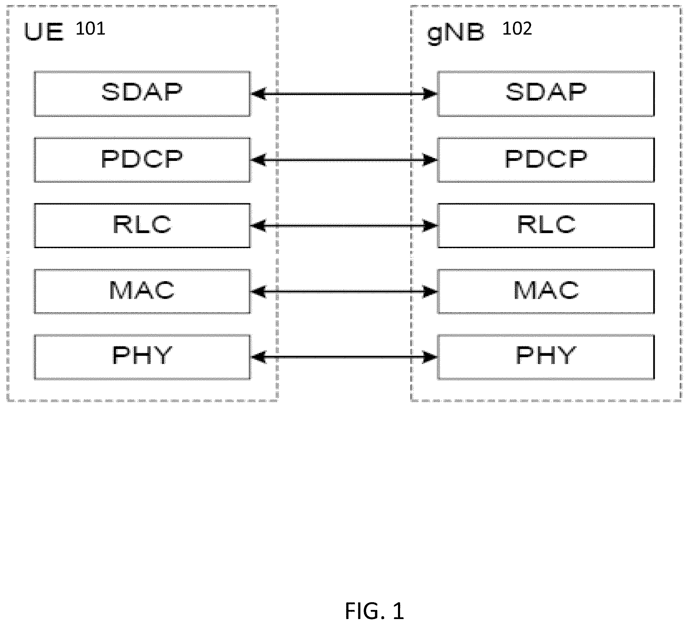

In the following sections, overview of Next Generation Radio Access Network (NG-RAN) architecture and 5G New Radio (NR) stacks will be discussed. 5G NR (New Radio) user and control plane functions with monolithic gNB (gNodeB) are shown in FIGS. 1, 2 and 3. For the user plane (shown in FIG. 1, which is in accordance with 3GPP TS 38.300), PHY (physical), MAC (Medium Access Control), RLC (Radio Link Control), PDCP (Packet Data Convergence Protocol) and SDAP (Service Data Adaptation Protocol) sublayers originate in the UE 101 and are terminated in the gNB 102 on the network side. US 2020/382254 Al has an objective to enhance PDCP PDUs retransmissions and associated flow control between a Central Unit (CU) and a Distributed Unit (DU).

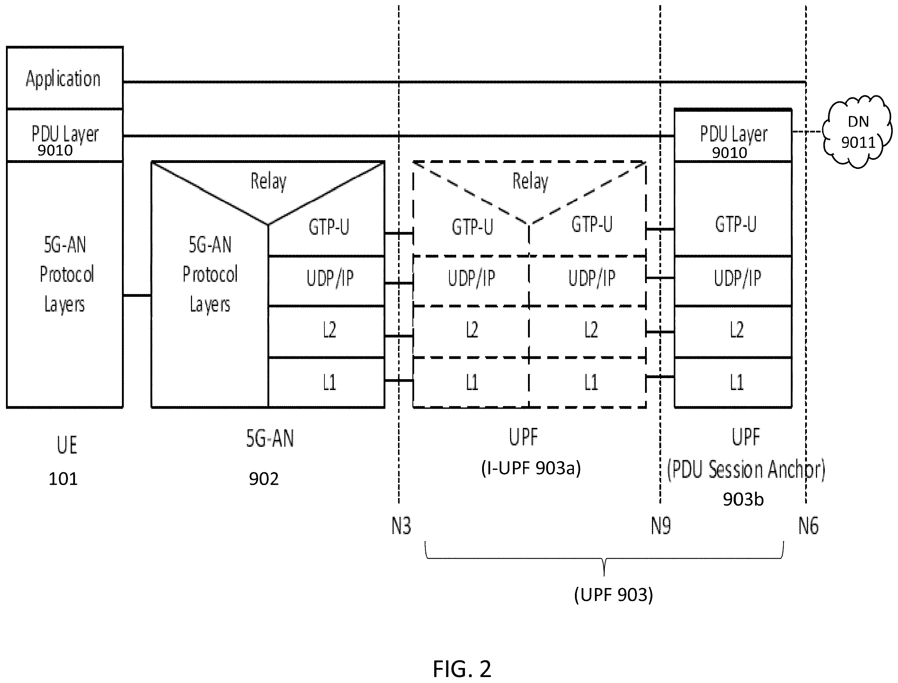

In addition, as shown in FIG. 2 (which is accordance with 3GPP TS 23.501), which is a block diagram illustrating the user plane protocol stacks for a PDU session of 5G NR, the Protocol Data Unit (PDU) layer 9010 corresponds to the PDU carried between the user equipment (UE) 101 and the data network (DN) 9011 over the PDU session. As shown in FIG. 2, UE 101 is connected to the 5G access network (AN) 902, which AN 902 is in turn connected via the N3 interface to the Intermediate UPF (I-UPF) 903a portion of the UPF 903, which I-UPF 903a is in turn connected via the N9 interface to the PDU session anchor 903b portion of the UPF 903, and which PDU session anchor 903b is connected to the DN 9011. The PDU session can correspond to Internet Protocol version 4 (IPv4), IPv6, or both types of IP packets (IPv4v6). General Packet Radio Services (GPRS) Tunneling Protocol - User Plane (GTP-U) shown in FIG. 2 supports tunnelling user plane data over N3 and N9 interfaces and provides encapsulation of end user PDUs for N3 and N9 interfaces.

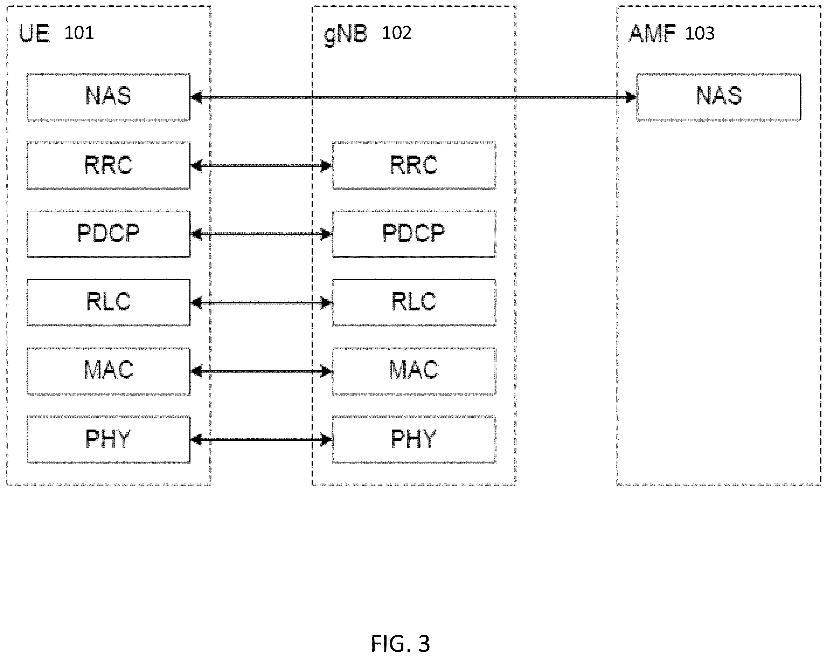

For the control plane (shown in FIG. 3, which is in accordance with 3GPP TS 38.300), RRC (Radio Resource Control), PDCP, RLC, MAC and PHY sublayers originate in the UE 101 and are terminated in the gNB 102 on the network side, and NAS (Non-Access Stratum) originate in the UE 101 and is terminated in the AMF (Access Mobility Function) 103 on the network side.

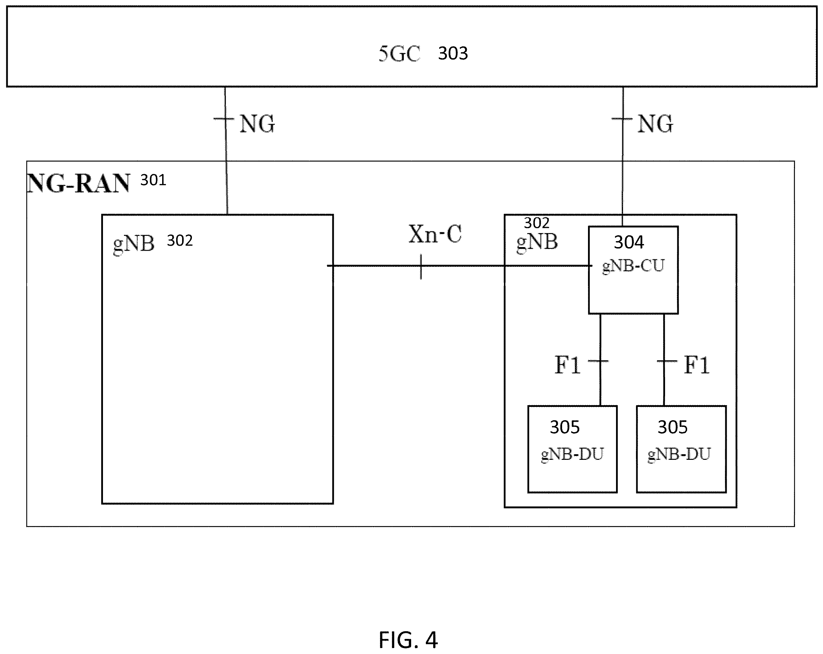

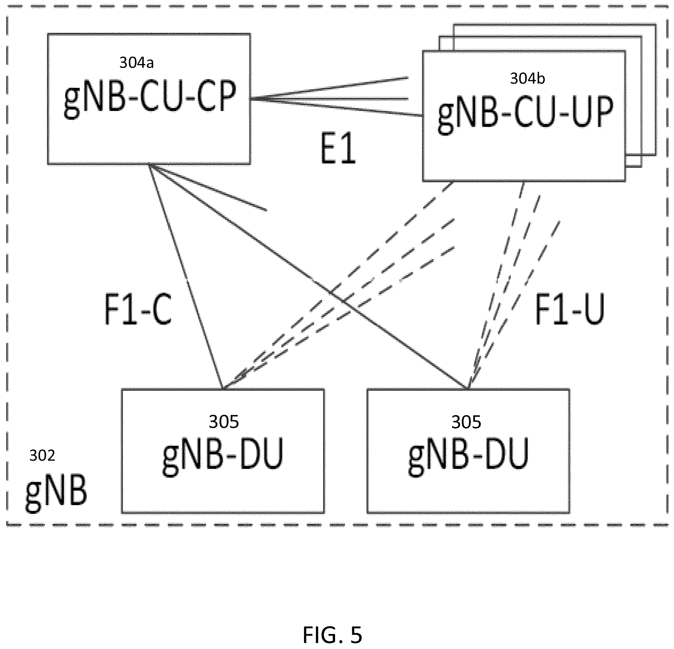

NG-Radio Access Network (NG-RAN) architecture from 3GPP TS 38.401 is shown in FIGS. 4-5. As shown in FIG. 4, the NG-RAN consists of a set of gNBs connected to the 5GC through the NG interface. As shown in FIG. 4, the NG-RAN 301 consists of a set of gNBs 302 connected to the 5GC 303 through the NG interface. Each gNB comprises gNB-CU 304 and one or more gNB-DU 305 (see FIG. 4). As shown in FIG. 5 (which illustrates separation of CU-CP (CU-Control Plane) and CU-UP (CU-User Plane)), E1 is the interface between gNB-CU-CP (CU-Control Plane) 304a and gNB-CU-UP (CU-User Plane) 304b, F1-C is the interface between gNB-CU-CP 304a and gNB-DU 305, and F1-U is the interface between gNB-CU-UP 304b and gNB-DU 305. As shown in FIG. 5, gNB 302 can consist of a gNB-CU-CP 304a, multiple gNB-CU-UPs (or gNB-CU-UP instances) 304b and multiple gNB-DUs (or gNB-DU instances) 305. One gNB-DU 305 is connected to only one gNB-CU-CP 304a, and one gNB-CU-UP 304b is connected to only one gNB-CU-CP 304a.

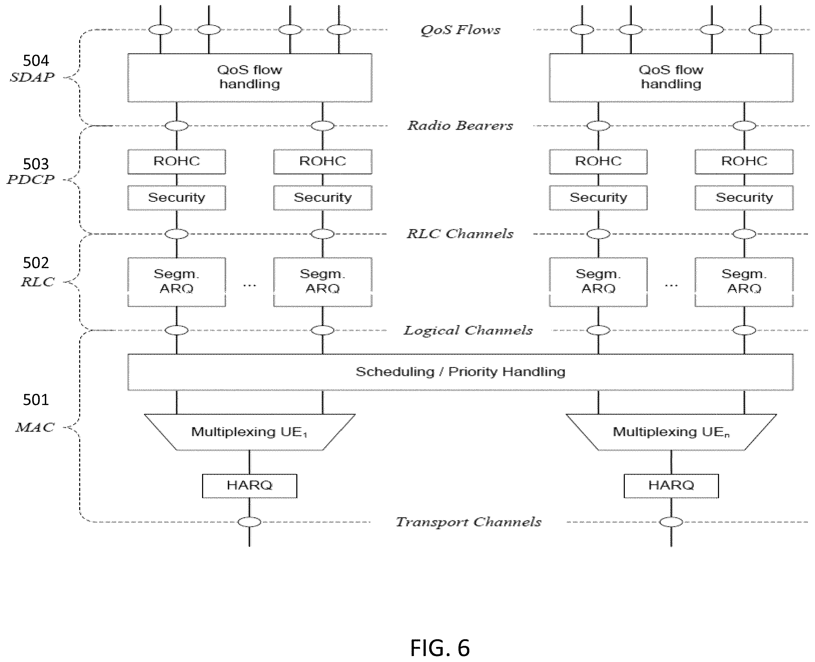

In this section, an overview Layer 2 (L2) of 5G NR will be provided in connection with FIGS. 6-8. L2 of 5G NR is split into the following sublayers (in accordance with 3GPP TS 38.300):

1) Medium Access Control (MAC) 501 in FIGS. 6-8: Logical Channels (LCs) are SAPs (Service Access Points) between the MAC and RLC layers. This layer runs a MAC scheduler to schedule radio resources across different LCs (and their associated radio bearers). For the downlink direction, the MAC layer processes and sends RLC PDUs received on LCs to the Physical layer as Transport Blocks (TBs). For the uplink direction, it receives transport blocks (TBs) from the physical layer, processes these and sends to the RLC layer using the LCs.

2) Radio Link Control (RLC) 502 in FIGS. 6-8: The RLC sublayer presents RLC channels to the Packet Data Convergence Protocol (PDCP) sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.

3) Packet Data Convergence Protocol (PDCP) 503 in FIGS. 6-8: The PDCP sublayer presents Radio Bearers (RBs) to the SDAP sublayer. There are two types of Radio Bearers: Data Radio Bearers (DRBs) for data and Signaling Radio Bearers (SRBs) for control plane.

4) Service Data Adaptation Protocol (SDAP) 504 in FIGS. 6-8: The SDAP offers QoS Flows to the 5GC (5G Core). This sublayer provides mapping between a QoS flow and a DRB. It is used for QoS Flow to DRB mapping.

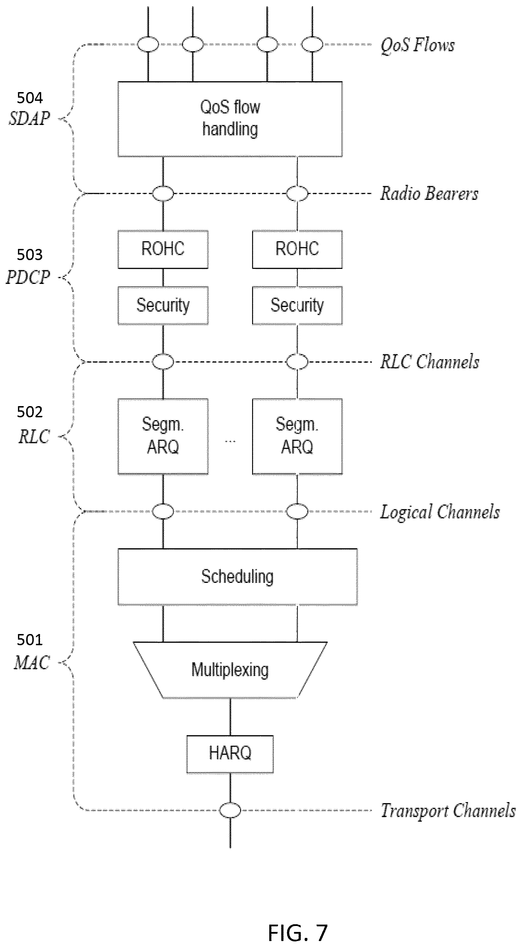

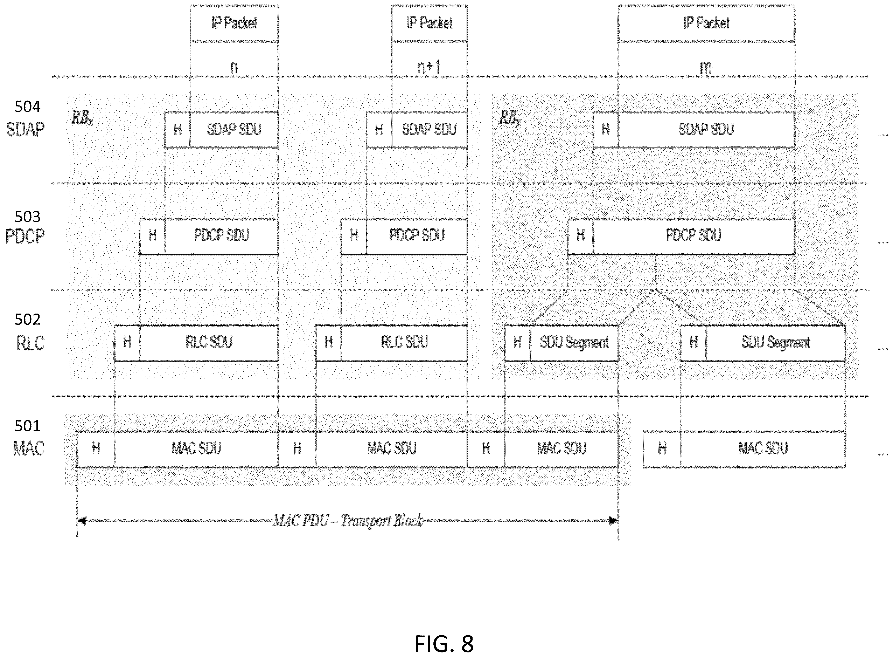

FIG. 6 is a block diagram illustrating DL L2 structure (including a scheduler or priority handling module which handles multiple UEs in a cell), in accordance with 3GPP TS 38.300. FIG. 7 is a block diagram illustrating L2 structure for a single UE, in accordance with 3GPP TS 38.300. FIG. 8 is a block diagram illustrating L2 data flow example, in accordance with 3GPP TS 38.300 (in FIG. 8, H denotes headers or sub-headers).

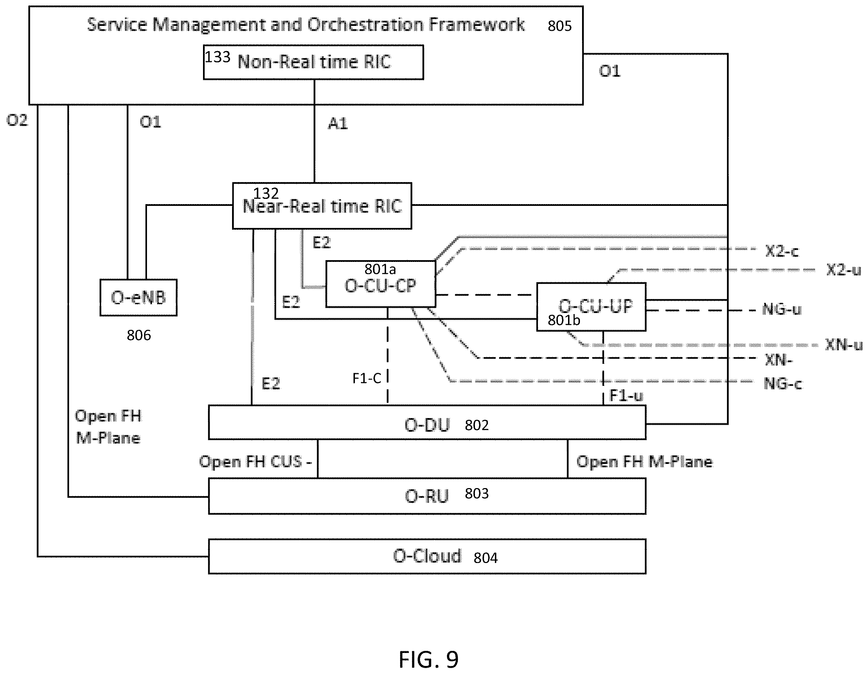

Open Radio Access Network (O-RAN) is based on disaggregated components which are connected through open and standardized interfaces based on 3GPP NG-RAN. An overview of O-RAN with disaggregated RAN CU (Centralized Unit), DU (Distributed Unit), and RU (Radio Unit), near-real-time Radio Intelligent Controller (Near-RT RIC) and non-real-time RIC is illustrated in FIG. 9.

As shown in FIG. 9, the CU (shown split as O-CU-CP 801a and O-CU-UP 801b) and the DU (shown as O-DU 802) are connected using the F1 interface (with F1-C for control plane and F1-U for user plane traffic) over a mid-haul (MH) path. One DU can host multiple cells (e.g., one DU could host 24 cells) and each cell may support many users. For example, one cell may support 800 Radio Resource Control (RRC)-connected users and out of these 800, there may be 250 Active users (i.e., users that have data to send at a given point of time).

A cell site can comprise multiple sectors, and each sector can support multiple cells. For example, one site could comprise three sectors and each sector could support eight cells (with eight cells in each sector on different frequency bands). One CU-CP (CU-Control Plane) could support multiple DUs and thus multiple cells. For example, a CU-CP could support 1,000 cells and around 100,000 User Equipments (UEs). Each UE could support multiple Data Radio Bearers (DRBs) and there could be multiple instances of CU-UP (CU-User Plane) to serve these DRBs. For example, each UE could support 4 DRBs, and 400,000 DRBs (corresponding to 100,000 UEs) may be served by five CU-UP instances (and one CU-CP instance).

The DU could be located in a private data center, or it could be located at a cell-site. The CU could also be in a private data center or even hosted on a public cloud system. The DU and CU, which are typically located at different physical locations, could be tens of kilometers apart. The CU communicates with a 5G core system, which could also be hosted in the same public cloud system (or could be hosted by a different cloud provider). A RU (Radio Unit) (shown as O-RU 803 in FIG. 9) is located at a cell-site and communicates with the DU via a front-haul (FH) interface.

The E2 nodes (CU and DU) are connected to the near-real-time RIC 132 using the E2 interface. The E2 interface is used to send data (e.g., user and/or cell KPMs) from the RAN, and deploy control actions and policies to the RAN at near-real-time RIC 132. The applications or services at the near-real-time RIC 132 that deploys the control actions and policies to the RAN are called xApps. During the E2 setup procedures, the E2 node advertises the metrics it can expose, and an xApp in the near-RT RIC can send a subscription message specifying key performance metrics which are of interest. The near-real-time RIC 132 is connected to the non-real-time RIC 133 (which is shown as part of Service Management and Orchestration (SMO) Framework 805 in FIG. 9) using the A1 interface. The applications that are hosted at non-RT-RIC are called rApps. Also shown in FIG. 9 are O-eNB 806 (which is shown as being connected to the near-real-time RIC 132 and the SMO Framework 805) and O-Cloud 804 (which is shown as being connected to the SMO Framework 805).

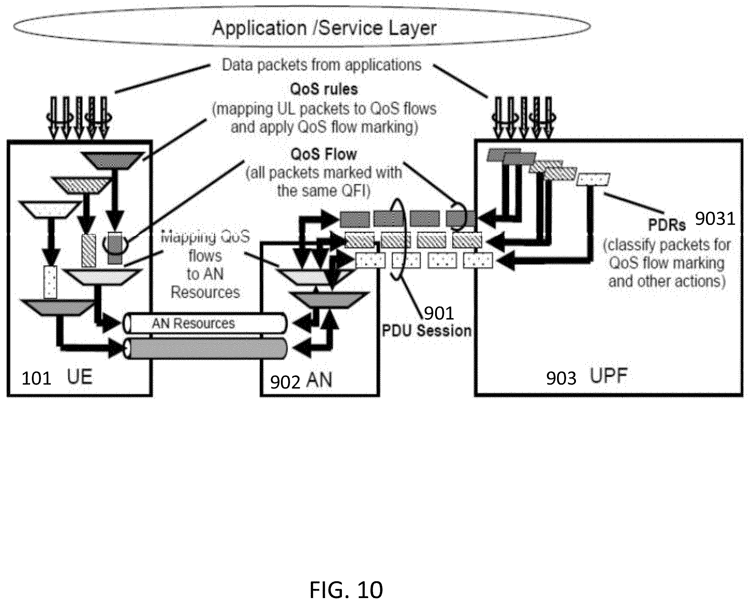

In this section, PDU sessions, DRBs, and quality of service (QoS) flows will be discussed. In 5G networks, PDU connectivity service is a service that provides exchange of PDUs between a UE and a data network identified by a Data Network Name (DNN). The PDU Connecitivity service is supported via PDU sessions that are established upon request from the UE. The DNN defines the interface to a specific external data network. One or more QoS flows can be supported in a PDU session. All the packets belonging to a specific QoS flow have the same 5QI (5G QoS Identifier). A PDU session consists of the following: Data Radio Bearer which is between UE and CU in RAN; and an NG-U GTP tunnel which is between CU-UP and UPF (User Plane Function) in the core network. FIG. 10 illustrates an example PDU session (in accordance with 3GPP TS 23.501) consisting of multiple DRBs, where each DRB can consist of multiple QoS flows. In FIG. 10, three components are shown for the PDU session 901: UE 101; access network (AN) 902; and UPF 903, which includes Packet Detection Rules (PDRs) 9031.

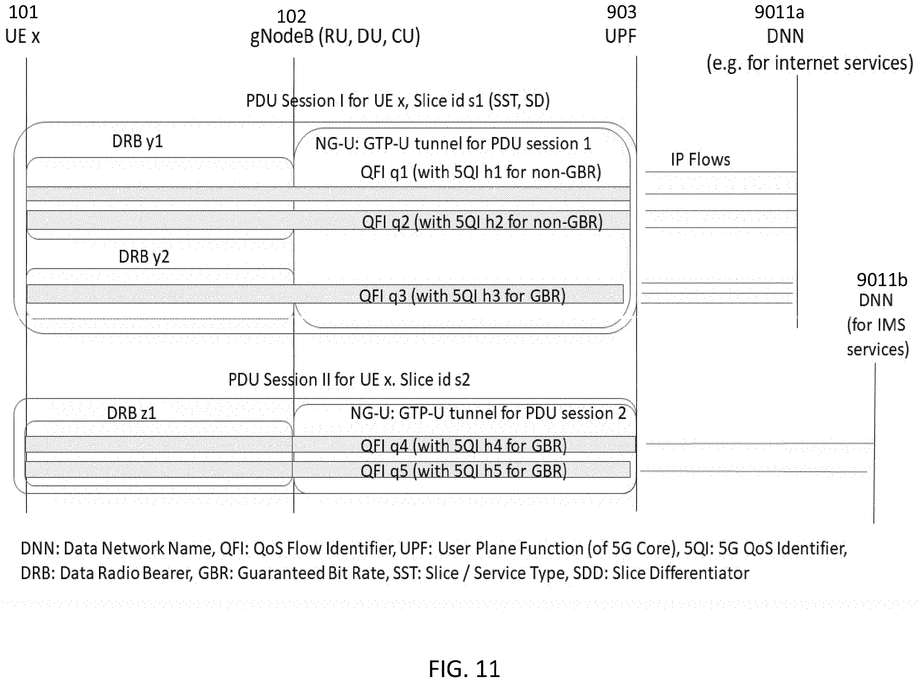

The following should be noted for 3GPP 5G network architecture, which is illustrated in FIG. 11 (in the context of multiple PDU sessions involving multiple DRBs and QoS Flow Identifiers (QFIs), which PDU sessions are implemented involving UE 101, gNodeB 102, UPF 903, and DNNs 9011a and 9011b):

1) The transport connection between the base station (i.e., CU-UP) and the UPF 903 uses a single GTP-U tunnel per PDU session, as shown in FIG. 11. The PDU session is identified using GTP-U TEID (Tunnel Endpoint Identifier).

2) The transport connection between the DU and the CU-UP uses a single GTP-U tunnel per DRB (see, e.g., FIG. 11).

3) SDAP:

a) The SDAP (Service Adaptation Protocol) 504 Layer receives downlink data from the UPF 903 across the NG-U interface.

b) The SDAP maps one or more QoS Flow(s) onto a specific DRB.

c) The SDAP header is present between the UE 101 and the CU (when reflective QoS is enabled), and includes a field to identify the QoS flow within a specific PDU session.

4) GTP-U protocol includes a field to identify the QoS flow and is present between CU and UPF 903 (in the core network). FIG. 11 illustrates multiple PDU sessions involving multiple DRBs and QoS Flow Identifiers (QFIs).

In this section, standardized 5QI to QoS characteristics mapping will be discussed. As per 3GPP TS 23.501, the one-to-one mapping of standardized 5QI values to 5G QoS characteristics is specified in Table 1 shown below. The first column represents the 5QI value. The second column lists the different resource types, i.e., as one of Non-GBR, GBR, Delay-critical GBR. The third column ("Default Priority Level") represents the priority level $Priority_{5QI}$, for which the lower the value the higher the priority of the corresponding QoS flow. The fourth column represents the Packet Delay Budget (PDB), which defines an upper bound for the time that a packet may be delayed between the UE and the N6 termination point at the UPF. The fifth column represents the Packet Error Rate (PER). The sixth column represents the maximimum data burst volume for delay-critical GBR types. The seventh column represents averaging window for GBR, delay critical GBR types. Note that only a subset of 5QI values defined in 3GPP TS 23.501 are shown in Table 1 below.

For example, as shown in Table 1, 5QI value 1 represents GBR resource type with the default priority value of 20, PDB of 100 ms, PER of 0.01, and averaging window of 2000ms. Conversational voice falls under this catogery. Similarly, as shown in Table 1, 5QI value 7 represents non-GBR resource type with the default priority value of 70, PDB of 100ms and PER of 0.001. Voice, video (live streaming), and interactive gaming fall under this catogery.

Table 1

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 1 | GBR (NOTE 1) | 20 | 100 ms (NOTE 11, NOTE 13) | $10^{-2}$ | N/A | 2000 ms | Conversational Voice |
| 2 | | 40 | 150 ms (NOTE 11, NOTE 13) | $10^{-3}$ | N/A | 2000 ms | Conversational Video (Live Streaming) |
| 3 | | 30 | 50 ms (NOTE 11, NOTE 13) | $10^{-3}$ | N/A | 2000 ms | Real Time Gaming, V2X messages (see TS 23.287 [121]). Electricity distribution - medium voltage, Process automation monitoring |
| 4 | | 50 | 300 ms (NOTE 11, NOTE 13) | $10^{-6}$ | N/A | 2000 ms | Non-Conversational Vi-deo (Buffered Streaming) |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 65 (NOTE 9, NOTE 12) | | 7 | 75 ms (NOTE 7, NOTE 8) | $10^{-2}$ | N/A | 2000 ms | Mission Critical user plane Push To Talk voice (e.g., MCPTT) |
| 66 (NOTE 12) | | 20 | 100 ms (NOTE 10, NOTE 13) | $10^{-2}$ | N/A | 2000 ms | Non-Mission-Critical user plane Push To Talk voice |
| 67 (NOTE 12) | | 15 | 100 ms (NOTE 10, NOTE 13) | $10^{-3}$ | N/A | 2000 ms | Mission Critical Video user plane |
| 75 14) (NOTE 14) | | | | | | | |
| 71 | | 56 | 150 ms (NOTE 11, NOTE 13, NOTE 15) | $10^{-6}$ | N/A | 2000 ms | "Live" Uplink Streaming (e.g. TS 26.238 [76]) |
| 72 | | 56 | 300 ms (NOTE 11, NOTE 13, NOTE 15) | $10^{-4}$ | N/A | 2000 ms | "Live" Uplink Streaming (e.g. TS 26.238 [76]) |
| 73 | | 56 | 300 ms (NOTE 11, NOTE 13, NOTE 15) | $10^{-8}$ | N/A | 2000 ms | "Live" Uplink Streaming (e.g. TS 26.238 [76]) |
| 74 | | 56 | 500 ms (NOTE 11, NOTE 15) | $10^{-8}$ | N/A | 2000 ms | "Live" Uplink Streaming (e.g. TS 26.238 [76]) |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 76 | | 56 | 500 ms (NOTE 11, NOTE 13, NOTE 15) | $10^{-4}$ | N/A | 2000 ms | "Live" Uplink Streaming (e.g. TS 26.238 [76]) |
| 5 | Non-GBR (NOTE 1) | 10 | 100 ms NOTE 10, NOTE 13) | $10^{-6}$ | N/A | N/A | IMS Signalling |
| 6 | | 60 | 300 ms (NOTE 10, NOTE 13) | $10^{-6}$ | N/A | N/A | Video (Buffered Streaming) TCP-based (e.g., www, e-mail, chat, ftp, p2p file sharing, progressive video, etc.) |
| 7 | | 70 | 100 ms (NOTE 10, NOTE 13) | $10^{-3}$ | N/A | N/A | Voice, Video (Live Streaming) Interactive Gaming |

In this section, flow control between CU and DU will be discussed. In disaggregated architecture, gNB functionality is distributed among logical nodes CU-CP, CU-UP, DU and RU. DU and CU are connected through F1 interface. E1 interface connects CU-CP and CU-UP. The control plane interface F1-C is defined between CU-CP and DU, and the user plane interface F1-U is defined between CU-UP and DU. F1-U interface, the procedures and functionality of which interface are defined in 3GPP TS 38.425, supports NR User Plane (NR-UP) protocol, which provides support for flow control and reliability between CU-UP and DU. Communication over F1-U interface is achieved through exchange of three PDU types (or messages):

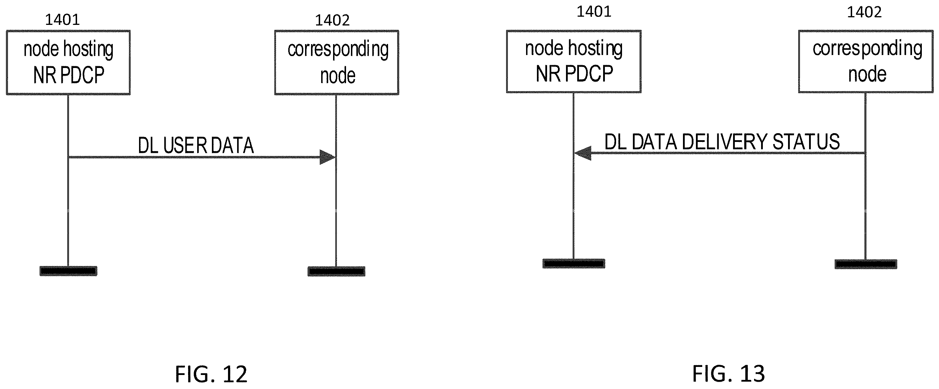

1) Downlink User Data (DUD) PDU from CU-UP to DU (as shown in FIG. 12): These are used to carry PDCP PDUs from CU-UP to DU for each DRB.

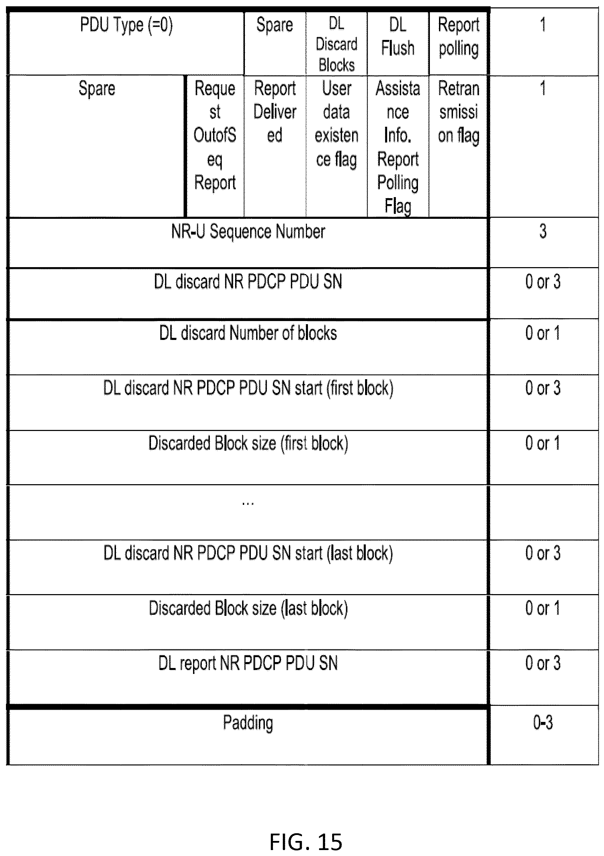

2) Downlink (DL) Data Delivery Status (DDDS) PDU from DU to CU-UP (as shown in FIG. 13 and FIG. 15).

a) The DDDS message conveys Desired Buffer Size (DBS), Desired Data Rate (DDR) and some other parameters from DU to CU-UP for each DRB as part of flow control feedback. If value of the DBS is zero for a DRB, the NR PDCP hosting node (e.g., the CU-UP in this example) shall stop sending data for that DRB from the CU-UP to the DU. If value of the DBS is greater than zero, the NR PDCP hosting node (e.g., CU-UP) may send up to this amount of data for that DRB. The value of DDR is the amount of data desired to be received every second by the DU (from CU-UP) for that DRB.

b) The corresponding node (e.g., DU in this example) can also transfer uplink data from the DU to the CU-UP for the concerned DRB along with the DDDS frame in the same GTP-U tunnel.

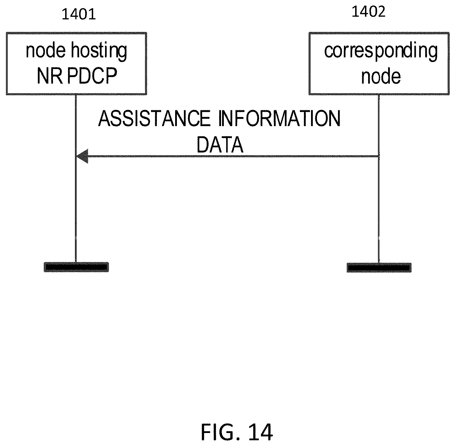

3) Transfer of Assistance Information (TAI) PDU from DU to CU-UP (as shown in FIG. 14).

To recap, FIG. 12 illustrates DL user data (i.e., PDCP PDUs) from the node hosting NR PDCP 1401 (CU-UP in this

# EP 4 507 372 B1

example) to RLC SDU queues at the corresponding node 1402 (DU in this example). FIG. 13 illustrates DL Data Delivery Status (DDDS) PDU (flow control feedback) being sent from the corresponding node 1402 (DU in this example) to the node hosting NR PDCP 1401 (CU-UP in this example) for each DRB. FIG. 14 illustrates transfer of (Radio) Assistance Information from the corresponding node 1402 (DU in this example) to the node hosting NR PDCP 1401 (CU-UP in this example).

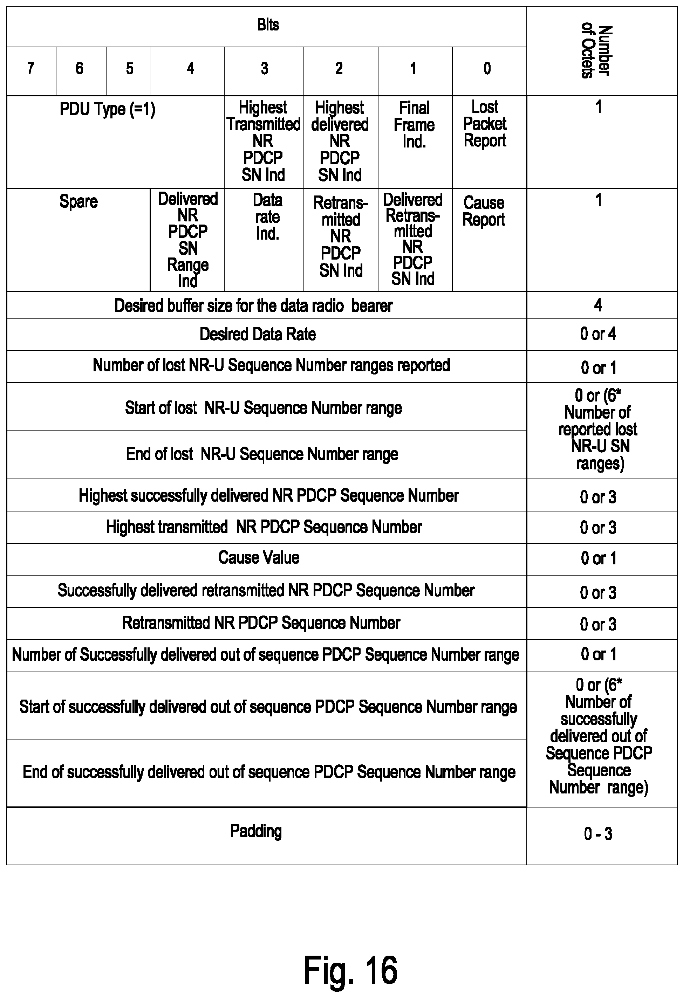

CU-UP sends PDCP PDUs to DU using NR-UP protocol. Each such PDCP PDU is carried using data PDU format (shown in FIG. 15), and NR-U Sequence Number (NR-U SN) is added to each such data PDU. In the present disclosure, "NR-U SN" and "NR-UP SN" are used interchangeably. The DDDS message (shown in FIG. 16) conveys, among other information, Desired Buffer Size (DBS) in bytes, and Desired Data Rate (DDR) in units of bytes/second from DU to CU-UP. If the value of the DBS is zero for a DRB, the NR PDCP hosting node (e.g., the CU-UP in this example) shall stop sending data for that DRB from the CU-UP to the DU. If the value of the DBS is greater than zero, the NR PDCP hosting node (e.g., CU-UP) may send up to this amount of data for that DRB. The value of DDR is the amount of data desired to be received every second by the DU (from CU-UP) for that DRB. FIG. 16 illustrates the details of DL Data Delivery Status (DDDS) sent from the corresponding node (DU in this example) to the node hosting NR PDCP (CU-UP in this example).

In this section, CU-DU flow control issues caused by midhaul impairments will be discussed. Usually, the air interface is the bottleneck in a mobile wireless network, and thus conventional flow control mechanisms will be based only on air-interface impairments. However, in certain deployments, MH can also become a potential bottleneck. The midhaul (MH) transport network that connects CU-UP with DU can consist of optical fibers, switches and routers. Occasionally, due to busy-hour conditions or transient traffic spike events, switches and/or routers drop packets to avoid congestion in the network. The MH transport network can also be based on microwave links, which are susceptible to adverse (and/or unpredictable) radio channel conditions, and such networks can have higher packet drop rate compared to MH based on optical fibers. When the dropped packets are NR-UP PDUs, they manifest at DU as NR-U SN losses, resulting in DU requesting retransmissions from CU-UP. Retransmissions lead to increased delay over the midhaul. In the case of applications designed over TCP, the source application can reduce the transmission rate, thus adversely affecting the application performance. In some cases (or over some time intervals), midhaul losses are so high that the midhaul becomes the bottleneck link, and the air interface is no longer the bottleneck link in the 5G network. However, conventional mitigation technique for MH impairments on flow control mechanisms is limited to retransmission mechanisms over the MH network.

Accordingly, there is a need for a system and method to achieve an improved CU-DU flow control optimization for lossy midhaul (MH) in O-RAN networks.

## SUMMARY

Accordingly, what is desired is a system and method to optimize CU-DU flow control methods to detect the congestion events over midhaul and proactively take corrective action to reduce packet dropping in the midhaul transport network.

The invention is defined by the independent claims. Further embodiments of the invention are defined by the dependent claims.

For this application the following terms and definitions shall apply:

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The above-described and other features and advantages of the present disclosure will be appreciated and understood by those skilled in the art from the following detailed description, drawings, and appended claims.

## DESCRIPTION OF THE DRAWINGS

7

FIG. 1 is a block diagram illustrating the user plane stack of 5G NR.

FIG. 2 is a block diagram illustrating the user plane protocol stacks for a PDU session of 5G NR.

FIG. 3 is a block diagram illustrating the control plane stack of 5G NR.

FIG. 4 is a block diagram illustrating NG-RAN architecture.

FIG. 5 is a block diagram illustrating separation of CU-CP and CU-UP in NG-RAN architecture.

FIG. 6 is a block diagram illustrating DL L2 structure.

FIG. 7 is a block diagram illustrating UL L2 structure.

FIG. 8 is a block diagram illustrating L2 data flow example.

FIG. 9 illustrates an overview of O-RAN architecture.

FIG. 10 illustrates an example PDU session consisting of multiple DRBs.

FIG. 11 illustrates multiple PDU sessions involving multiple DRBs and QoS Flow Identifiers (QFIs).

FIG. 12 illustrates DL user data (i.e., PDCP PDUs) from the node hosting NR PDCP (CU-UP in this example) to the corresponding node (DU in this example).

FIG. 13 illustrates DL Data Delivery Status (DDDS) PDU being sent from the corresponding node (DU in this example) to the node hosting NR PDCP (CU-UP in this example).

FIG. 14 illustrates transfer of Assistance Information from the corresponding node (DU in this example) to the node hosting NR PDCP (CU-UP in this example).

FIG. 15 illustrates the PDU format of PDCP PDU sent from CU-UP to DU using NR-UP protocol.

FIG. 16 illustrates the details of DL Data Delivery Status (DDDS) sent from the corresponding node (DU in this example) to the node hosting NR PDCP (CU-UP in this example) for each DRB.

DETAILED DESCRIPTION

In an example embodiment of the method ("Method 1") according to the present disclosure, computation of desired data rate (DDR) is provided. According to this example method, DDR is computed for each DRB and sent every time when DBS is sent from DU to CU-UP (along with DDDS). In a first sub-variant this example method, DU computes DDR for a DRB as follows:

$$DDR = TBS (MCS'', prb'', rank) * (number\ of\ slots/subframe\ in\ 1\ sec) * (beta)*(beta\_drb)$$

Here, TBS is the Transport block size computation as per 3GPP TS 38.214 section 5.1.3 and TS 36.213 section 7.1.7.

$$MCS''= min\ \{(current\ MCS + MCS\_step),\ MCSmax\}.$$

∘ MCS_step is a correction factor for current MCS.
∘ Range of MCS_step: [-4,4].
∘ MCS_Step is positive or negative based on CQI consistency. If UE is reporting high CQI consistently, then MCS step is positive, else it is negative.
∘ Current MCS is instantaneous current value of modulation and coding scheme (MCS) at a current time instant t.
∘ MCSmax is the maximum MCS possible in a given system.

$$prb'' = \max\left(\frac{PRB_{\max}}{\#UE_s}, PRB_{avg}, 1\right)$$

- Here, PRB_avg is the average number of PRBs allocated to UE counting all DL slots.

- #UEs is the number of active UEs in the cell.

- $PRB_{max}$ is the maximum number of possible PRBs in the cell.

- *rank* is the number of layers in PDSCH at a given time.
- *beta* is a scaling factor, which depends upon, e.g., behavior of midhaul links, number of component carriers used for carrier aggregation, buffer management policies used in the DU, etc.
- A UE could have multiple DRBs. In that case, DDR for each individual DRB is computed using a scaling factor, beta_drb, as used above.

In a second sub-variant of the example method in which DDR is computed for each DRB and sent every time when DBS is sent from DU to CU-UP (along with DDDS), DU computes DDR for a DRB as follows:

DDR = TBS (MCS'', prb'', rank) * (number of slots/subframe in 1 sec) * (beta)*(beta_drb)

Here, TBS is the Transport block size computation as per 3GPP TS 38.214 section 5.1.3 and TS 36.213 section 7.1.7.

*MCS''= min {(average MCS_{current} + MCS_step), MCSmax}.*

∘ MCS_step is a correction factor for average MCS(current).
∘ Range of MCS_step: [-1,0,1].
∘ MCS_Step is positive or negative based on CQI consistency. If UE is reporting high CQI consistently, then MCS step is positive, else it is negative or zero.
∘ Weighted average MCS (denoted as "avgMCS_{current}") of the UE is computed as follows:

▪

$$avgMCS_{current} = avgMCS_{previous}*(1\text{-alpha}) +$$

$$current\ MCS*alpha.$$

- Here, alpha is between 0 and 1.
- $avgMCS_{current}$ is the current weighted average of MCS (e.g., at time t).
- $avgMCS_{previous}$ is the weighted average of MCS at a previous time instant (at time t-1 if we last computed avgMCS at time t-1).
- current MCS is the instantaneous current value of modulation and coding scheme (MCS) at a current time instant t.

o MCSmax is the maximum MCS possible in a given system.

$$prb'' = \max\left(\frac{PRB_{\max}}{\#UE_s}, PRB_{avg}, 1\right)$$

- Here, PRB_avg is the average number of PRBs allocated to UE counting all DL slots.

- #UEs is the number of active UEs in the cell,

- $PRB_{max}$ is the maximum number of possible PRBs in the cell.

- *rank* is the number of layers in PDSCH at a given time.

- *beta* is a scaling factor, which depends upon, e.g., behavior of backhaul and/or midhaul links, carrier aggregation, buffer management policies used in the DU, etc.

- A UE could have multiple DRBs. In that case, DDR for each individual DRB is computed using a scaling factor, beta_drb, as used above.

In the above-described first and second sub-variants of Method 1, the range of beta could be [n1, n2], with n2 greater than or equal to n1. For some deployments, e.g., in scenarios with a relatively good midhaul and enough buffer space available in DU, beta could be equal or greater than one. In this scenario, it may be desired to transfer data (i.e., PDCP PDUs) from CU-UP to DU as soon as possible. For other deployment scenarios, e.g., with midhaul behaving poorly during a transient period, beta could be chosen to be less than one during that transient period. Thus, the value of beta can change during the life cycle of a DRB for which flow control is being applied. In addition, a UE could have multiple DRBs. In that case, DDR for each individual DRB is computed using a scaling factor, beta_drb, as used above. For example, if there are two DRBs of same 5QI (e.g., 5QI 9) and both DRBs support similar data rate, value of beta_drb could be set to 0.5.

In a second example embodiment of the method ("Method 2") according to the present disclosure, DU estimates the effective data rate at which CU-UP can send data for each DRB to reduce congestion over midhaul. This estimation can be split into two sequential steps.

Step 1: DU estimates the DDR as in Method 1.

Step 2: DU will reduce its DDR estimate arrived in Step 1 by a value $\delta$ (i.e., effective DDR = DDR - $\delta$) that depends on the estimates of lost downlink NR-UP SNs (corresponding to NR-UP PDUs) in the latest specified time interval T (for example, T could be 100 ms):

a) If no downlink PDCP PDUs (and the corresponding NR-UP PDUs) were lost over the mid-haul in this interval T, effective DRR is set to DDR as computed at DU in Method 1 (and communicated to CU-UP through the DDDS message).

b) If there are losses over mid-haul, Method 2 makes $\delta$ proportional to the loss-rate estimation.

i. If number of NR-UP SN losses over mid-haul keeps increasing over successive time intervals of duration T, we decrease $\delta$ aggressively to compute effective DDR.

ii. For example, assume that $n_1$ NR-UP PDUs are lost since the last DDR computation. Let $\delta(n_1)$ be the amount by which DDR estimate of Step 1 is reduced to calculate the effective DDR. After a short while (say, after time T), DU learns that $n_2$ NR-UP PDUs are lost. If $n_2 >> n_1$, then we make $\delta(n_2) >> \delta(n_1)$. $\delta(n_2)$ will be unchanged if $n_2$ is approximately equal to $n_1$.

iii. It should be noted that effective DDR is not allowed to go below a pre-specified threshold.

In Method 2, DU also uses one more trigger to send DDDS to CU-UP. Once DU discovers that the number of downlink packets lost (e.g., based on NR-UP SN losses) over midhaul is above a specified threshold, DU immediately sends DDDS (with updated DDR) to CU-UP.

When packet loss ratio estimate at DU is more than a configurable threshold, DU will send DDR (and DDDS) more frequently than when the loss ratio (e.g., based on NR-UP SN losses) is less than the threshold. This can be generalized by letting DU define multiple thresholds, where each threshold will signify switch from one reporting frequency to the other reporting frequency depending on whether the packet loss ratio is increasing or decreasing.

After a short while, midhaul network may get decongested resulting in smaller packet loss ratio estimate at DU. In such a scenario, DU will revert to the earlier reporting frequency at which it used to feedback DDR. Thus, the time duration between two successive DDDS messages will depend on the midhaul packet loss ratio estimate, in addition to other events and causes.

In a third example embodiment of the method ("Method 3") according to the present disclosure, CU-UP utilizes information obtained from the DDDS message to compute effective DDR to mitigate packet losses over the midhaul. In a first sub-variant of Method 3, CU-UP learns about congestion on the midhaul from the DDDS PDUs received from DU. The protocol fields "Number of lost NR-U Sequence Number ranges reported", "Start of lost NR-U Sequence Number range", and "End of lost NR-U Sequence Number range" of the DDDS PDU provide information about lost NR-UP SNs. Let $B_n$ denote the highest lost NR-UP SN reported by the $n^{th}$ DDDS PDU, and $t(B_n)$ denote the time instant at which CU-UP has transmitted the NR-UP SN $B_n$. Upon the reception of the $n^{th}$ DDDS PDU, CU-UP will learn feedback information (which SNs are received/lost) about the following NR-UP SNs: { $B_{n-1} + 1, B_{n-1} + 2, ..., B_n$}.

An example of the above-described sub-variant is provided below. Let $B_{n-1} = 500$ and $B_n = 1500$. Assume that the $n^{th}$ DDDS PDU has reported four NR-UP SN ranges [725, 756], [834, 849], [952, 965], and [1480, 1500] as being lost. Then the $n^{th}$ DDDS PDU is providing feedback information about the following NR-UP SNs: {501, 502, ..., 1498, 1499, 1500}. Of these, the lost NR-UP SNs are 32 SNs corresponding to the range [725, 756], 16 SNs corresponding to the range [834, 849], 14 SNs corresponding to the range [952, 965], and 21 SNs corresponding to the range [1480, 1500]. Thus, a total of 83 NR-UP SNs are lost on the midhaul out of 1001 SNs corresponding to the range [500, 1500]. Let the NR-UP SNs in the set $\{B_{n-1} + 1, B_{n-1} + 2, ..., B_n\}$ correspond to $totTxBytes_n$ PDCP bytes. Of these, let the number of lost bytes be denoted by $lostBytes_n$. Then define sustainable rate at CU-UP = $(totTxBytes_n - lostBytes_n)/ [t(B_n) - t(B_{n-1})]$. So far, we have discussed the rate that the midhaul network can support without packet loss. However, assuming the "Desired Data Rate" field of the DDDS PDU is present in the DDDS PDU, the actual rate at which CU-UP shall transmit PDCP PDUs is the minimum of sustainable rate and the Desired Data Rate.

In this example embodiment, CU-UP determines the data rate to transmit to DU as follows:

$$\{$$

$$\text{If(``Desired Data Rate'' field in DDDS is included\}}$$

$$\{$$

$$\text{CU-UP will transmit at } \min\left\{DDR, \frac{totTxBytes_n - lostBytes_n}{t(B_n) - t(B_n - 1)}(\text{``bytes/second''})\right\}$$

$$\text{Else}$$

$$\{$$

$$\text{CU-UP will transmit at the rate } \frac{totTxBytes_n - lostBytes_n}{t(B_n) - t(B_n - 1)}(\text{bytes/second})$$

$$\}$$

$$\}$$

Note that above method is used only when relevant parameters are available in the DDDS message.

In a second sub-variant of Method 3, CU-UP can update the received DDR by subtracting a value, e.g., $\varepsilon$, from the received DDR, which value $\varepsilon$ can depend on information on lost NR-UP SNs in the latest interval of time T1. The steps of the second sub-variant of Method 3 are as follows:

Step 1: DU estimates the DDR as in Method I and sends it to CU-UP.

Step 2: CU-UP will reduce the DDR obtained in Step 1 by a value $\varepsilon$ (i.e., effective DDR = DDR - $\varepsilon$) that depends on the estimates of lost downlink NR-UP SNs in the latest interval of time T (for example, T1 could be 100 ms). CU-UP obtains knowledge about these lost NR-UP SNs based on the retransmission request received as part of DDDS message from DU.

a) If there is no request to retransmit PDCP PDUs (and the corresponding NR-UP PDUs) in the DDDS message (over interval T1), effective DDR at CU-UP is set to DDR as received from DU.

b) If there are retransmission requests received as part of DDDS message, then $\varepsilon$ is set proportional to the loss-rate estimation.

i. If the requested number of NR-UP SN keeps increasing over successive time intervals of duration T1, $\varepsilon$ is decreased aggressively to compute effective DDR at CU-UP. For example, let's assume that DU has requested to retransmit $n_1$ NR-UP PDUs since the last effective DDR computation. Let $\varepsilon$ $(n_1)$ be the amount by which DDR estimate of Step 1 is reduced to calculate the effective DDR. After a short while (e.g., after time T1), CU-UP learns that DU has requested to retransmit $n_2$ NR-UP PDUs. If $n_2 \gg n_1$, then we make $\varepsilon$ $(n_2) \gg \varepsilon$ $(n_1)$. $\varepsilon$ $(n_2)$ will be unchanged if $n_2$ is approximately equal to $n_1$.

It should be noted that the effective DDR is not allowed to go below a pre-specified threshold.

A fourth example embodiment of the method ("Method 4") according to the present disclosure can be implemented for a scenario in which no coordination exists between CU-UP and DU regarding which entity should compute the packet loss rate. In this scenario, CU-UP and DU, unaware of each other's decision to estimate the packet loss rate, can redundantly reduce the effective transmission rate as follows: i) DU computes "effective" DDR by factoring in the packet loss rate and sends it in the DDDS message; and ii) unaware of this, CU-UP may independently estimate the packet loss rate and make the transmission rate from CU-UP to DU much less than the received DDR. To avoid such a situation, in Method 4, DU utilizes a spare flag in the DDDS PDU (as per 3GPP TS 38.425) to inform CU-UP that its DDR estimate has already factored in the MH packet loss rate. This flag can be referred to as "Loss Rate Modulated DDR". This flag will be set when DU has factored in the packet loss rate while computing the DDR. If this flag is set, CU-UP uses the DDR as communicated by DU, and doesn't update DDR on its own for a pre-specified time interval.

While the present disclosure has been described with reference to one or more exemplary embodiments, it will be understood by those skilled in the art that various changes may be made and equivalents may be substituted for elements thereof without departing from the scope of the present disclosure. For example, although the example methods have been described in the context of 5G cellular networks, the example methods are equally applicable for 4G and other similar wireless networks. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

For the sake of completeness, a list of abbreviations used in the present specification is provided below:

3GPP: 3rd Generation Partnership Project
5GC: 5G Core Network
5G NR: 5G New Radio
5QI: 5G QoS Identifier
ACK: Acknowledgement
AM: Acknowledged Mode
APN: Access Point Name
ARP: Allocation and Retention Priority
BS: Base Station
CP: Control Plane
CQI: Channel Quality Indicator
CU: Centralized Unit
CU-CP: Centralized Unit - Control Plane
CU-UP: Centralized Unit - User Plane
DBS: Desired Buffer Size
DL: Downlink
DDDS: DL Data Delivery Status
DDR: Desired Data Rate
DNN: Data Network Name
DRB: Data Radio Bearer
DU: Distributed Unit
eNB: evolved NodeB
EPC: Evolved Packet Core
GBR: Guaranteed Bit Rate
gNB: gNodeB
GTP-U: GPRS Tunneling Protocol - User Plane
IP: Internet Protocol
L1: Layer 1
L2: Layer 2
L3: Layer 3
L4S: Low Latency, Low Loss and Scalable Throughput
LC: Logical Channel
MAC: Medium Access Control
MCS: Modulation and Coding Scheme
NACK: Negative Acknowledgement
NAS: Non-Access Stratum
NR-U SN: New Radio - User Plane, Sequence Number
NR-UP SN: New Radio - User Plane, Sequence Number. (Used interchangeably with NR-U SN)
NSI: Network Slice Instance
NSSI: Network Slice Subnet Instance
O-RAN: Open Radio Access Network

PDB: Packet Delay Budget
PDCP : Packet Data Convergence Protocol
PDU: Protocol Data Unit
PHY: Physical Layer
PRB: Physical Resource Block
QCI: QoS Class Identifier
QFI: QoS Flow Id
QoS : Quality of Service
QFI: QoS Flow Identifier
RAT: Radio Access Technology
RDI: Reflective QoS Flow to DRB Indication
RLC: Radio Link Control
RLC-AM: RLC Acknowledged Mode
RLC-UM: RLC Unacknowledged Mode
RQI: Reflective QoS Indication
RRC: Radio Resource Control
RRM: Radio Resource Management
RTP: Real-Time Transport Protocol
RTCP: Real-Time Transport Control Protocol
RU: Radio Unit
SCTP: Stream Control Transmission Protocol
SD: Slice Differentiator
SDAP: Service Data Adaptation Protocol
SLA: Service Level Agreement
S-NSSAI: Single Network Slice Selection Assistance
SNL Sequence Number
SST: Slice / Service Type
TB: Transport Block
TCP: Transmission Control Protocol
TEID: Tunnel Endpoint Identifier
UE: User Equipment
UP: User Plane
UL: Uplink
UM: Unacknowledged Mode
UPF: User Plane Function

## Claims

1. A method for optimizing midhaul flow control between a centralized unit, CU, and a distributed unit, DU, of an Open Radio Access Network, O-RAN, comprising:

   computing, by the DU, desired data rate, DDR, for each data radio bearer, DRB; and
   sending, by the DU, the DDR every time when desired buffer size, DBS, is sent from DU to CU-user plane, CU-UP, along with Downlink Data Delivery Status, DDDS;
   wherein the method is **characterized in that** the DU computes DDR for a DRB as follows: DDR = TBS (MCS", prb", rank) * (number of slots in 1 sec) * (beta)*(beta_drb), with TBS being the transport block size computation, prb" is a parameter defining the maximum number of physical resource blocks allocation for a user equipment, UE, rank is the number of layers in Physical Downlink Shared Channel, PDSCH, at a given time, beta is a first scaling factor, beta_drb is a second scaling factor, and wherein one of:

   a) MCS"= min {(current modulation and coding scheme (current MCS) + MCS_step), MCSmax}, or
   b) MCS"= min {(average $MCS_{current}$ + MCS_step), MCSmax},

   wherein current MCS is an instantaneous current value of MCS at a current time instant $t$, avg$MCS_{current}$ is current weighted average MCS at a current time instant $t$, MCSmax is the maximum possible MCS, and MCS_Step is a correction factor for the current MCS and the average $MCS_{current}$, and MCS_Step is one of positive or negative depending on channel quality indicator, CQI, consistency.

**2.** The method of claim 1, wherein for b) *MCS"= min {(average MCS(current) + MCS_step), MCSmax},* current weighted average MCS at a current time instant *t*, avgMCS$_{current}$, of a user equipment, UE, is computed as follows:

$$\text{avgMCS}_{\text{current}} = \text{avgMCS}_{\text{previous}}*(1\text{-alpha}) + \text{current MCS*alpha,}$$

wherein alpha is between 0 and 1, and avgMCS$_{previous}$ is a weighted average of MCS at previous time instant *t*-1.

**3.** The method of claim 1 or claim 2, wherein:

$$prb'' = \max\left(\frac{PRB_{\max}}{\#UE_s}, PRB_{avg}, 1\right),$$

PRB_avg is the average number of physical resource blocks, PRBs, allocated to UE counting all downlink, DL, slots, #UEs is the number of active UEs in the cell, and PRB$_{max}$ is the maximum number of possible PRBs in the cell.

**4.** The method of claim 1, further comprising:
reducing, by the DU, the computed DDR for a DRB by a reduction value $\delta$ which depends on an amount of loss of downlink, DL, new radio user-plane sequence numbers, NR-UP SNs, in a specified time interval over a midhaul connection between the CU and the DU.

**5.** The method of claim 4, further comprising:
at least one of:

i) sending, by the DU to the CU-UP, a flag along with the DDDS to indicate the computed DDR has been reduced to reflect the loss of DL NR-UP SNs;
ii) sending, by the DU to the CU-UP, the DDDS after the DU discovers that the amount of loss of DL NR-UP SNs in the specified time interval over the midhaul connection between the CU and DU is above a specified threshold; and
iii) adjusting, by the DU, a frequency of sending the DDDS, depending on whether packet loss ratio estimate at DU based on the amount of loss of DL NR-UP SNs in the specified time interval over the midhaul connection between the CU and DU is above a specified threshold.

**6.** The method of claim 1, further comprising:
reducing, by the CU-UP, the received DDR for a DRB by a reduction value $\varepsilon$ which depends on an amount of loss of downlink, DL, new radio user-plane sequence numbers, NR-UP SNs, in a specified time interval over a midhaul connection between the CU and the DU.

**7.** The method of claim 1, further comprising:
computing, by the CU-UP, an effective DDR for a DRB based on the received DDR and information derived from the DDDS regarding a proportion of lost DL NR-UP SNs relative to transmitted NR-UP SNs in a specified time interval over a midhaul connection between the CU and the DU, wherein the effective DDR is the minimum value between i) the received DDR and ii) the proportion of lost DL NR-UP SNs relative to transmitted NR-UP SNs in the specified time interval.

**8.** A system for optimizing midhaul flow control in an Open Radio Access Network, O-RAN, comprising:

a centralized unit, CU, comprising a CU-user plane, CU-UP; and
a distributed unit, DU, configured to i) compute a desired data rate, DDR, for each data radio bearer, DRB, and ii) send the DDR every time when desired buffer size, DBS, is sent from the DU to the CU-UP, along with Downlink Data Delivery Status, DDDS;
wherein the system is **characterized in that** the DU is configured to compute the DDR for a DRB as follows: DDR = TBS (MCS", prb", rank) * (number of slots in 1 sec) * (beta)*(beta_drb), with TBS being the transport block size computation, prb" is a parameter defining the maximum number of physical resource blocks allocation for a user equipment, UE, rank is the number of layers in Physical Downlink Shared Channel, PDSCH, at a given time, beta is a first scaling factor, beta_drb is a second scaling factor, and wherein one of:

a) *MCS"= min {(current modulation and coding scheme (current MCS) + MCS_step), MCSmax},* or
b) *MCS"= min {(average MCS$_{current}$ + MCS_step), MCSmax},*

wherein current MCS is an instantaneous current value of MCS at a current time instant *t*, avgMCS$_{current}$ is current weighted average MCS at a current time instant *t*, MCSmax is the maximum possible MCS, and MCS_Step is a correction factor for the current MCS and the average MCS$_{current}$, and MCS_Step is one of positive or negative depending on channel quality indicator, CQI, consistency.

9. The system of claim 8, wherein for b) *MCS"= min {(average MCS(current) + MCS_step), MCSmax},* current weighted average MCS at a current time instant *t*, avgMCS$_{current}$, of a user equipment, UE, is computed as follows:

$$avgMCS_{current} = avgMCS_{previous}*(1\text{-}alpha) + current\ MCS*alpha,$$

wherein alpha is between 0 and 1, and avgMCS$_{previous}$ is a weighted average of MCS at previous time instant *t*-1.

10. The system of claim 8 or claim 9, wherein:

$$prb'' = \max\left(\frac{PRB_{\max}}{\#UE_s}, PRB_{avg}, 1\right),$$

PRB_avg is the average number of physical resource blocks, PRBs, allocated to UE counting all downlink, DL, slots, #UEs is the number of active UEs in the cell, and PRB$_{max}$ is the maximum number of possible PRBs in the cell.

11. The system of claim 8, wherein:
the DU is configured to reduce the computed DDR for a DRB by a reduction value $\delta$ which depends on an amount of loss of downlink, DL, new radio user-plane sequence numbers, NR-UP SNs, in a specified time interval over a midhaul connection between the CU and the DU.

12. The system of claim 11, wherein:
the DU is configured to send to the CU-UP a flag along with the DDDS to indicate the computed DDR has been reduced to reflect the loss of DL NR-UP SNs.

13. The system of claim 8, wherein:
the CU-UP is configured to reduce the received DDR for a DRB by a reduction value $\varepsilon$ which depends on an amount of loss of downlink, DL, new radio user-plane sequence numbers, NR-UP SNs, in a specified time interval over a midhaul connection between the CU and the DU.

14. The system of claim 8, wherein:
the CU-UP is configured to compute an effective DDR for a DRB based on the received DDR and information derived from the DDDS regarding a proportion of lost DL NR-UP SNs relative to transmitted NR-UP SNs in a specified time interval over a midhaul connection between the CU and the DU, wherein the effective DDR is the minimum value between i) the received DDR and ii) the proportion of lost DL NR-UP SNs relative to transmitted NR-UP SNs in the specified time interval.

**Patentansprüche**

1. Verfahren zur Optimierung der Midhaul-Flusssteuerung zwischen einer zentralisierten Einheit, CU, und einer verteilten Einheit, DU, eines Open Radio Access Network, O-RAN, umfassend:

Berechnen, mittels der DU, der gewünschten Datenrate, DDR, für jeden Datenfunkträger, DRB; und
Senden, mittels der DU, der DDR jedes Mal, wenn die gewünschte Puffergröße, DBS, von der DU an die CU-Benutzerebene, CU-UP, gesendet wird, zusammen mit dem Downlink-Datenübertragungsstatus, DDDS;
wobei das Verfahren **dadurch gekennzeichnet ist, dass** die DU die DDR für einen DRB wie folgt berechnet:

$$DDR = TBS\ (MCS'',\ prb'',\ rank) * (Anzahl\ der\ Slots\ in\ 1\ Sekunde) * (beta)*(beta\_drb),$$

wobei TBS die Transportblockgrößenberechnung ist, prb" ein Parameter ist, der die maximale Anzahl von physikalischen Ressourcenblöcken definiert, die einem Benutzerendgerät, UE, zugewiesen werden, rank die Anzahl von Schichten im Physical Downlink Shared Channel, PDSCH, zu einer gegebenen Zeit ist, beta ein erster Skalierungsfaktor ist, beta_drb ein zweiter Skalierungsfaktor ist, und wobei eines von:

a) *MCS"= min {(aktuelles Modulations- und Codierungsschema (aktuelles MCS) + MCS_step), MCSmax},* oder

b) *MCS"= min {(durchschnittliche MCS$_{current}$ + MCS_step), MCSmax},*

wobei das aktuelle MCS ein momentaner aktueller Wert von MCS zu einem aktuellen Zeitpunkt $t$ ist, avgMCS$_{current}$ der aktuelle gewichtete Durchschnitt von MCS zu einem aktuellen Zeitpunkt $t$ ist, MCSmax das maximal mögliche MCS ist, und MCS_Step ein Korrekturfaktor für das aktuelle MCS und den durchschnittlichen MCS$_{current}$ ist, und

MCS_Step ein positiver oder negativer Wert in Abhängigkeit von der Konsistenz eines Kanalqualitätsindikators, CQI, ist.

2. Verfahren nach Anspruch 1, wobei für b) *MCS"= min {(durchschnittliches MCS(current) + MCS_step), MCSmax},* das aktuelle gewichtete durchschnittliche MCS zu einem aktuellen Zeitpunkt t, avgMCS$_{current}$, eines Benutzerendgeräts, UE, wie folgt berechnet wird:

$$avgMCS_{current} = avgMCS_{previous}*(1\text{-}alpha) + current\ MCS*alpha,$$

wobei alpha zwischen 0 und 1 liegt und avgMCS$_{previous}$ ein gewichteter Durchschnitt des MCS zum vorherigen Zeitpunkt $t\text{-}1$ ist.

3. Verfahren gemäß Anspruch 1 oder 2, wobei:

$$prb'' = \max\left(\frac{PRB_{\max}}{\#UE_s}, PRB_{avg}, 1\right),$$

wobei PRB_avg die durchschnittliche Anzahl der physikalischen Ressourcenblöcke, PRBs, ist, die dem UE zugewiesen sind, wobei alle Downlink-, DL, Slots gezählt werden, wobei #UEs die Anzahl der aktiven UEs in der Zelle ist, und PRB$_{max}$ die maximale Anzahl der möglichen PRBs in der Zelle ist.

4. Verfahren nach Anspruch 1, das ferner umfasst:
Verringern, mittels der DU, der berechneten DDR für einen DRB um einen Verringerungswert $\delta$, der von der Höhe des Verlustes von Downlink-, DL, New-Radio-Benutzerebenen-Sequenznummern, NR-UP SNs, in einem bestimmten Zeitintervall über eine Midhaul-Verbindung zwischen der CU und der DU abhängt.

5. Verfahren nach Anspruch 4, das ferner umfasst:
mindestens eines aus:

i) Senden, mittels der DU an die CU-UP, eines Flags zusammen mit dem DDDS, um anzuzeigen, dass die berechnete DDR verringert wurde, um den Verlust von DL NR-UP SNs widerzuspiegeln;
ii) Senden, mittels der DU an die CU-UP, des DDDS nachdem die DU festgestellt hat, dass die Anzahl der Verluste von DL NR-UP SNs im festgelegten Zeitintervall über die Midhaul-Verbindung zwischen der CU und der DU über einem festgelegten Schwellenwert liegt; und
iii) Anpassen, mittels der DU, einer Häufigkeit des Sendens des DDDS in Abhängigkeit davon, ob die Schätzung des Paketverlustverhältnisses an der DU basierend auf der Menge des Verlustes von DL NR-UP SNs in dem festgelegten Zeitintervall über die Midhaul-Verbindung zwischen der CU und der DU über einem festgelegten Schwellenwert liegt.

6. Verfahren nach Anspruch 1, ferner umfassend:
Verringern, mittels der CU-UP, der empfangenen DDR für einen DRB um einen Verringerungswert $\varepsilon$, der von der Höhe des Verlustes von Downlink-, DL, New-Radio-Benutzerebenen-Sequenznummern, NR-UP SNs, in einem bestimmten Zeitintervall über eine Midhaul-Verbindung zwischen der CU und der DU abhängt.

**7.** Verfahren nach Anspruch 1, ferner umfassend:
Berechnen, mittels der CU-UP, einer effektiven DDR für einen DRB basierend auf der empfangenen DDR und von dem DDDS abgeleiteten Informationen bezüglich eines Anteils verlorener DL-NR-UP-SNs im Verhältnis zu übertragenen NR-UP-SNs in einem bestimmten Zeitintervall über eine Midhaul-Verbindung zwischen der CU und der DU, wobei die effektive DDR der Mindestwert zwischen i) der empfangenen DDR und ii) dem Anteil verlorener DL-NR-UP-SNs im Verhältnis zu übertragenen NR-UP-SNs in dem bestimmten Zeitintervall ist.

**8.** System zur Optimierung einer Midhaul-Flusssteuerung in einem Open Radio Access Network, O-RAN, das aufweist:

eine zentralisierte Einheit, CU, die eine CU-Benutzerebene, CU-UP, aufweist; und
eine verteilte Einheit, DU, die dazu ausgebildet ist, i) eine gewünschte Datenrate, DDR, für jeden Datenfunkträger, DRB, zu berechnen und ii) die DDR jedes Mal zu senden, wenn die gewünschte Puffergröße, DBS, von der DU an die CU-UP gesendet wird, zusammen mit dem Downlink-Datenübertragungsstatus, DDDS;
wobei das System **dadurch gekennzeichnet ist, dass** die DU dazu ausgebildet ist, die DDR für einen DRB wie folgt zu berechnen:

$$DDR = TBS\ (MCS'',\ prb'',\ rank) * (\text{Anzahl der Slots in 1 Sekunde}) * (beta)*(beta\_drb),$$

wobei TBS die Transportblockgrößenberechnung ist, prb" ein Parameter ist, der die maximale Anzahl von physikalischen Ressourcenblöcken definiert, die einem Benutzerendgerät, UE, zugewiesen werden, rank die Anzahl von Schichten im Physical Downlink Shared Channel, PDSCH, zu einer gegebenen Zeit ist, beta ein erster Skalierungsfaktor ist, beta_drb ein zweiter Skalierungsfaktor ist, und wobei eines von:

a) *MCS"= min {(aktuelles Modulations- und Codierungsschema (aktuelles MCS) + MCS_step), MCSmax},* oder
b) *MCS"= min {(average MCS$_{current}$ + MCS_step), MCSmax},*

wobei das aktuelle MCS ein momentaner aktueller Wert von MCS zu einem aktuellen Zeitpunkt *t* ist, avgMCS$_{current}$ der aktuelle gewichtete Durchschnitt von MCS zu einem aktuellen Zeitpunkt *t* ist, MCSmax das maximal mögliche MCS ist, und MCS_Step ein Korrekturfaktor für das aktuelle MCS und den durchschnittlichen *MCS$_{current}$* ist, und MCS_Step ein positiver oder negativer Wert in Abhängigkeit von der Konsistenz eines Kanalqualitätsindikators, CQI, ist.

**9.** System nach Anspruch 8, wobei für b) *MCS"= min {(durchschnittliches MCS(current) + MCS_step), MCSmax},* das aktuelle gewichtete durchschnittliche MCS zu einem aktuellen Zeitpunkt t, avgMCS$_{current}$, eines Benutzerendgeräts, UE, wie folgt berechnet wird:

$$avgMCS_{current} = avgMCS_{previous}*(1\text{-alpha}) + current\ MCS*alpha,$$

wobei alpha zwischen 0 und 1 liegt und avgMCS$_{previous}$ ein gewichteter Durchschnitt des MCS zum vorherigen Zeitpunkt *t-1* ist.

**10.** System nach Anspruch 8 oder Anspruch 9, wobei:

$$prb'' = \max\left(\frac{PRB_{\max}}{\#UE_s}, PRB_{avg}, 1\right),$$

wobei PRB_avg die durchschnittliche Anzahl der physikalischen Ressourcenblöcke, PRBs, ist, die dem UE zugewiesen sind, wobei alle Downlink-, DL, Slots gezählt werden, wobei #UEs die Anzahl der aktiven UEs in der Zelle ist, und PRB$_{max}$ die maximale Anzahl der möglichen PRBs in der Zelle ist.

**11.** nach gemäß Anspruch 8, wobei:
die DU so ausgebildet ist, dass sie die berechnete DDR für einen DRB um einen Verringerungswert $\delta$ verringert, der von der Höhe des Verlustes von Downlink-, DL, New-Radio-Benutzerebenen-Sequenznummern, NR-UP SNs, in einem bestimmten Zeitintervall über eine Midhaul-Verbindung zwischen der CU und der DU abhängt.

**12.** System nach Anspruch 11, wobei:
die DU so ausgebildet ist, dass sie einen Flag zusammen mit dem DDDS an die CU-UP sendet, um anzuzeigen, dass die berechnete DDR verringert wurde, um den Verlust von DL NR-UP SNs widerzuspiegeln.

**13.** System nach Anspruch 8, wobei:
die CU-UP so ausgebildet ist, dass sie die empfangene DDR für einen DRB um einen Verringerungswert $\varepsilon$ verringert, der von der Höhe des Verlustes von Downlink-, DL, New-Radio-Benutzerebenen-Sequenznummern, NR-UP SNs, in einem bestimmten Zeitintervall über eine Midhaul-Verbindung zwischen der CU und dem DU abhängt.

**14.** System nach Anspruch 8, wobei:
die CU-UP so ausgebildet ist, dass sie eine effektive DDR berechnet für einen DRB basierend auf der empfangenen DDR und von dem DDDS abgeleiteten Informationen bezüglich eines Anteils verlorener DL-NR-UP-SNs im Verhältnis zu übertragenen NR-UP-SNs in einem bestimmten Zeitintervall über eine Midhaul-Verbindung zwischen der CU und der DU, wobei die effektive DDR der Mindestwert zwischen i) der empfangenen DDR und ii) dem Anteil verlorener DL-NR-UP-SNs im Verhältnis zu übertragenen NR-UP-SNs in dem bestimmten Zeitintervall ist.

**Revendications**

**1.** Procédé d'optimisation de commande de flux d'interface intermédiaire entre une unité centralisée, dite CU, et une unité distribuée, dite DU, d'un réseau d'accès radio libre, dit O-RAN, comprenant les étapes consistant à :

calculer, par la DU, un débit de données souhaité, dit DDR, de chaque porteuse radio de données, dite DRB ; et
envoyer, par la DU, le DDR à chaque fois qu'une taille de tampon souhaitée, dite DBS, est envoyée de la DU à un plan d'utilisateur de CU, dit CU-UP, conjointement avec un état de distribution de données de liaison descendante, dit DDDS ;
dans lequel le procédé est **caractérisé en ce que** la DU calcule un DDR d'une DRB de la façon suivante :

DDR = TBS (MCS", prb", rank) * (nombre de créneaux en 1 s) * (bêta) * (bêta_drb), TBS étant le calcul de taille de bloc de transport, prb" étant un paramètre définissant l'attribution de nombre maximal de blocs de ressources physiques d'un équipement d'utilisateur, dit UE, rank étant le nombre de couches d'un canal physique partagé de liaison descendante, dit PDSCH, à un instant donné, bêta étant un facteur d'échelle, bêta_drb étant un second facteur d'échelle, et dans lequel l'un de :

*a) MCS" = min {(schéma de modulation et de codage courant (MCS courant) + MCS_step), MCSmax},*
ou
*b) MCS" = min {(MCS$_{current}$ moyen + MCS_step), MCSmax},*

dans lequel MCS courant est une valeur courante instantanée de MCS à un instant courant *t,* avgMCS$_{current}$ est un MCS moyen pondéré courant à un instant courant *t,* MCSmax est le MCS maximal possible, et MCS_Step est un facteur de correction du MCS courant et du MCS$_{current}$ moyen, et MCS_Step est soit positif soit négatif en fonction d'une cohérence d'indicateur de qualité de canal, dit CQI.

**2.** Procédé selon la revendication 1, dans lequel pour b), *MCS" = min {(MCS(current) moyen + MCS_step), MCSmax},* un MCS moyen pondéré courant à un instant courant t, dit avgMCS$_{current}$, d'un équipement d'utilisateur, dit UE, est calculé de la façon suivante :

$$avgMCS_{current} = avgMCS_{previous}*(1\text{-}alpha) + MCS\ courant*alpha,$$

dans lequel alpha est compris entre 0 et 1, et avgMCS$_{previous}$ est une moyenne pondérée de MCS à un instant précédent *t*-1.

**3.** Procédé selon la revendication 1 ou la revendication 2, dans lequel : $prb'' = \max\left(\frac{PRB_{max}}{\#UE_s}, PRB_{avg}, 1\right),$

PRB_avg est le nombre moyen de blocs de ressources physiques, dits PRB, attribué à un UE comptant tous les créneaux de liaison descendante, dite DL, #UE est le nombre d'UE actifs dans la cellule, et PRB$_{max}$ est le nombre maximal de PRB possibles dans la cellule.

**4.** Procédé selon la revendication 1, comprenant en outre l'étape consistant à :
réduire, par la DU, le DDR calculé d'une DRB d'une valeur de réduction $\delta$ qui dépend d'une quantité de perte de nombres de séquences de plan d'utilisateur de nouvelle radio dits NR-UP SN de liaison descendante, dite DL, sur un intervalle de temps spécifié sur une connexion d'interface intermédiaire entre la CU et la DU.

**5.** Procédé selon la revendication 4, comprenant en outre au moins l'une des étapes consistant à :

i) envoyer, par la DU au CU-UP, un indicateur conjointement avec le DDDS pour indiquer le fait que le DDR calculé a été réduit pour refléter la perte de NR-UP SN de DL ;
ii) envoyer, par la DU au CU-UP, le DDDS après la découverte par la DU du fait que la quantité de perte de NR-UP SN de DL sur l'intervalle de temps spécifié sur la connexion d'interface intermédiaire entre la CU et la DU est supérieure à un seuil spécifié ; et
iii) régler, par la DU, une fréquence d'envoi du DDDS, en fonction du fait que l'estimation de taux de perte de paquets au niveau de la DU sur la base de la quantité de perte de NR-UP SN de DL sur l'intervalle de temps spécifié sur la connexion d'interface intermédiaire entre la CU et la DU est supérieure à un seuil spécifié.

**6.** Procédé selon la revendication 1, comprenant en outre l'étape consistant à :
réduire, par le CU-UP, le DDR reçu d'une DRB d'une valeur de réduction $\varepsilon$ qui dépend d'une quantité de perte de nombres de séquences de plan d'utilisateur de nouvelle radio, dits NR-UP SN de liaison descendante, dite DL,, sur un intervalle de temps spécifié sur une connexion d'interface intermédiaire entre la CU et la DU.

**7.** Procédé selon la revendication 1, comprenant en outre l'étape consistant à :
calculer, par le CU-UP, un DDR efficace d'une DRB sur la base du DDR reçu et d'informations dérivées du DDDS concernant une proportion de perte de NR-UP SN de DL par rapport aux NR-UP SN transmis sur un intervalle de temps spécifié sur une connexion d'interface intermédiaire entre la CU et la DU, dans lequel le DDR efficace est la valeur minimale entre i)le DDR reçu et ii) la proportion de perte de NR-UP SN de DL par rapport aux NR-UP SN transmis sur l'intervalle de temps spécifié.

**8.** Système d'optimisation de commande de flux d'interface intermédiaire dans un réseau d'accès radio libre, dit O-RAN, comprenant :

une unité centralisée, dite CU, comprenant un plan d'utilisateur de CU, dit CU-UP ; et
une unité distribuée, dite DU, configurée pour i) calculer un débit de données souhaité, dit DDR, de chaque porteuse radio de données, dite DRB, et ii) envoyer le DDR à chaque fois qu'une taille de tampon souhaitée, dite DBS, est envoyée de la DU au CU-UP, conjointement avec un état de distribution de données de liaison descendante, dit DDDS ;
dans lequel le système est **caractérisé en ce que** la DU est configurée pour calculer le DDR d'une DRB de la façon suivante :

DDR = TBS (MCS", prb", rank) * (nombre de créneaux en 1 s) * (bêta) * (bêta_drb), TBS étant le calcul de taille de bloc de transport, prb" étant un paramètre définissant l'attribution de nombre maximal de blocs de ressources physiques pour un équipement d'utilisateur, dit UE, rank étant le nombre de couches de canal physique partagé de liaison descendante, dit PDSCH, à un instant donné, bêta étant un premier facteur d'échelle, bêta_drb étant un second facteur d'échelle, et dans lequel l'un de :

a) *MCS" = min {(schéma de modulation et de codage courant (MCS courant) + MCS_step), MCSmax}*, ou
b) *MCS" = min {(MCS$_{current}$ moyen + MCS_step), MCSmax}*,

dans lequel MCS courant est une valeur courante instantanée de MCS à un instant courant *t,* avgMCS$_{current}$ est un MCS moyen pondéré courant à un instant courant *t,* MCSmax est le MCS maximal possible, et MCS_Step est un facteur de correction du MCS courant et du *MCS$_{current}$* moyen, et MCS_Step est soit positif soit négatif en fonction d'une cohérence d'indicateur de qualité de canal, dit CQI.

**9.** Procédé selon la revendication 8, dans lequel pour b), *MCS" = min {(MCS(current) moyen + MCS_step), MCSmax},* le MCS moyen pondéré courant à un instant courant *t*, dit avgMCS$_{current}$, d'un équipement d'utilisateur, dit UE, est calculé de la façon suivante :

$$avgMCS_{current} = avgMCS_{previous}*(1\text{-alpha}) + MCS \text{ courant}*alpha,$$

dans lequel alpha est compris entre 0 et 1, et $avgMCS_{previous}$ est une moyenne pondérée de MCS à un instant précédent t-1.

10. Système selon la revendication 8 ou la revendication 9, dans lequel :

$$prb'' = \max\left(\frac{PRB_{max}}{\#UE_S}, PRB_{avg}, 1\right),$$

PRB_avg est le nombre moyen de blocs de ressources physiques, dits PRB, attribué à un UE comptant tous les créneaux de liaison descendante, dite DL, #UE est le nombre d'UE actifs dans la cellule, et $PRB_{max}$ est le nombre maximal de PRB possibles dans la cellule.

11. Système selon la revendication 8, dans lequel :
la DU est configurée pour réduire le DDR calculé d'une DRB d'une valeur de réduction $\delta$ qui dépend d'une quantité de perte de nombres de séquences de plan d'utilisateur de nouvelle radio, dits NR-UP SN, de liaison descendante, dite DL, sur un intervalle de temps spécifié sur une connexion d'interface intermédiaire entre la CU et la DU.

12. Système selon la revendication 11, dans lequel :
la DU est configurée pour envoyer au CU-UP un indicateur conjointement avec le DDDS pour indiquer le fait que le DDR calculé a été réduit pour refléter la perte de NR-UP SN de DL.

13. Système selon la revendication 8, dans lequel :
le CU-UP est configuré pour réduire le DDR reçu d'une DRB d'une valeur de réduction $\varepsilon$ qui dépend d'une quantité de perte de nombres de séquences de plan d'utilisateur de nouvelle radio, dits NR-UP SN, de liaison descendante, dite DL, sur un intervalle de temps spécifié sur une connexion d'interface intermédiaire entre la CU et la DU.

14. Système selon la revendication 8, dans lequel :
le CU-UP est configuré pour calculer un DDR efficace d'une DRB sur la base du DDR reçu et d'informations dérivées du DDDS concernant une proportion de perte de NR-UP SN de DL par rapport aux NR-UP SN transmis sur un intervalle de temps spécifié sur une connexion d'interface intermédiaire entre la CU et la DU, dans lequel le DDR efficace est la valeur minimale entre i) le DDR reçu et ii) la proportion de perte de NR-UP SN de DL par rapport aux NR-UP SN transmis sur l'intervalle de temps spécifié.

EP 4 507 372 B1

FIG. 1

FIG. 2

FIG. 3

FIG. 4

FIG. 5

```
┌──────────────────────────────────────────────────────────────┐
│                                                                │
│    ┌──────────────┐              ┌──────────────┐              │
│    │   gNB-DU     │              │   gNB-DU     │              │
│    │    305       │              │    305       │              │
│    └──────────────┘              └──────────────┘              │
│                                                       gNB      │
│                                                       302      │
│         F1-U                          F1-C                     │
│                                                                │
│  ┌──────────────┐                                              │
│  │  gNB-CU-UP   │        E1         ┌──────────────┐           │
│  │    304b      │───────────────────│  gNB-CU-CP   │           │
│  └──────────────┘                   │    304a      │           │
│                                     └──────────────┘           │
└──────────────────────────────────────────────────────────────┘
```

EP 4 507 372 B1

FIG. 6

26

**504**
*SDAP*

QoS Flows

QoS flow
handling

Radio Bearers

**503**
*PDCP*

ROHC ROHC

Security Security

RLC Channels

**502**
*RLC*

Segm.
ARQ ... Segm.
ARQ

Logical Channels

Scheduling

**501**
*MAC*

Multiplexing

HARQ

Transport Channels

FIG. 7

FIG. 8

**FIG. 9**

FIG. 10

903 UPF

PDU Session 901

(classify packets for QoS flow marking and other actions)
PDRs 9031

QoS Flow
(all packets marked with the same QFI)

902 AN

AN Resources

Mapping QoS flows to AN Resources

QoS rules
(mapping UL packets to QoS flows and apply QoS flow marking)

101 UE

Data packets from applications

Application/ Service Layer

EP 4 507 372 B1

101
UE x

102
gNodeB (RU, DU, CU)

903
UPF

9011a
DNN
(e.g. for internet services)

PDU Session I for UE x, Slice id s1 (SST, SD)

DRB y1

NG-U: GTP-U tunnel for PDU session 1

QFI q1 (with 5QI h1 for non-GBR)

IP Flows

QFI q2 (with 5QI h2 for non-GBR)

DRB y2

QFI q3 (with 5QI h3 for GBR)

9011b
DNN
(for IMS services)

PDU Session II for UE x. Slice id s2

DRB z1

NG-U: GTP-U tunnel for PDU session 2

QFI q4 (with 5QI h4 for GBR)

QFI q5 (with 5QI h5 for GBR)

DNN: Data Network Name, QFI: QoS Flow Identifier, UPF: User Plane Function (of 5G Core), 5QI: 5G QoS Identifier, DRB: Data Radio Bearer, GBR: Guaranteed Bit Rate, SST: Slice / Service Type, SDD: Slice Differentiator

FIG. 11

EP 4 507 372 B1

| 1401 | | 1402 |
|------|---|------|
| node hosting NR PDCP | | corresponding node |

DL USER DATA →

**FIG. 12**

| 1401 | | 1402 |
|------|---|------|
| node hosting NR PDCP | | corresponding node |

← DL DATA DELIVERY STATUS

**FIG. 13**

EP 4 507 372 B1

1401                          1402

```
┌─────────────┐              ┌─────────────┐
│ node hosting│              │ corresponding│
│  NR PDCP    │              │    node     │
└─────────────┘              └─────────────┘
```

ASSISTANCE INFORMATION
DATA

FIG. 14

33

| PDU Type (=0) | | Spare | DL Discard Blocks | DL Flush | Report polling | 1 |
|---|---|---|---|---|---|---|
| Spare | Reque st OutofS eq Report | Report Deliver ed | User data existen ce flag | Assista nce Info. Report Polling Flag | Retran smissi on flag | 1 |
| NR-U Sequence Number | | | | | | 3 |
| DL discard NR PDCP PDU SN | | | | | | 0 or 3 |
| DL discard Number of blocks | | | | | | 0 or 1 |
| DL discard NR PDCP PDU SN start (first block) | | | | | | 0 or 3 |
| Discarded Block size (first block) | | | | | | 0 or 1 |
| ... | | | | | | |
| DL discard NR PDCP PDU SN start (last block) | | | | | | 0 or 3 |
| Discarded Block size (last block) | | | | | | 0 or 1 |
| DL report NR PDCP PDU SN | | | | | | 0 or 3 |
| Padding | | | | | | 0-3 |

FIG. 15

| Bits | | | | | | | | Number of Octets |
|---|---|---|---|---|---|---|---|---|
| 7 | 6 | 5 | 4 | 3 | 2 | 1 | 0 | |
| PDU Type (=1) | | | | Highest Transmitted NR PDCP SN Ind | Highest delivered NR PDCP SN Ind | Final Frame Ind. | Lost Packet Report | 1 |
| Spare | | Delivered NR PDCP SN Range Ind | | Data rate Ind. | Retrans-mitted NR PDCP SN Ind | Delivered Retrans-mitted NR PDCP SN Ind | Cause Report | 1 |
| Desired buffer size for the data radio bearer | | | | | | | | 4 |
| Desired Data Rate | | | | | | | | 0 or 4 |
| Number of lost NR-U Sequence Number ranges reported | | | | | | | | 0 or 1 |
| Start of lost NR-U Sequence Number range | | | | | | | | 0 or (6* Number of reported lost NR-U SN ranges) |
| End of lost NR-U Sequence Number range | | | | | | | | |
| Highest successfully delivered NR PDCP Sequence Number | | | | | | | | 0 or 3 |
| Highest transmitted NR PDCP Sequence Number | | | | | | | | 0 or 3 |
| Cause Value | | | | | | | | 0 or 1 |
| Successfully delivered retransmitted NR PDCP Sequence Number | | | | | | | | 0 or 3 |
| Retransmitted NR PDCP Sequence Number | | | | | | | | 0 or 3 |
| Number of Successfully delivered out of sequence PDCP Sequence Number range | | | | | | | | 0 or 1 |
| Start of successfully delivered out of sequence PDCP Sequence Number range | | | | | | | | 0 or (6* Number of successfully delivered out of Sequence PDCP Sequence Number range) |
| End of successfully delivered out of sequence PDCP Sequence Number range | | | | | | | | |
| Padding | | | | | | | | 0 - 3 |

Fig. 16

**EP 4 507 372 B1**

**Patent documents cited in the description**

- US 2020382254 A1